**Europäisches Patentamt**

**European Patent Office**

**Office européen des brevets**

(19)

(11) Veröffentlichungsnummer: **0 101 860**
B1

(12)

# EUROPÄISCHE PATENTSCHRIFT

(45) Veröffentlichungstag der Patentschrift:
26.02.86

(21) Anmeldenummer: 83106862.2

(22) Anmeldetag: 13.07.83

(51) Int. Cl.⁴: **B 65 G  49/00,** B 65 G  1/04

(54) Vorrichtung zum Richten von keramischen Platten in einem Stapelgerüst.

(30) Priorität: 23.07.82  DE 3227573

(43) Veröffentlichungstag der Anmeldung:
07.03.84 Patentblatt 84/10

(45) Bekanntmachung des Hinweises auf die Patenterteilung:
26.02.86 Patentblatt 86/9

(84) Benannte Vertragsstaaten:
FR GB IT NL

(56) Entgegenhaltungen:
DE - A - 2 024 189

(73) Patentinhaber: Hans Lingl Anlagenbau und
Verfahrenstechnik GmbH & Co. KG,
Albrecht-Berblinger-Strasse 6, D-7910 Neu-Ulm (DE)

(72) Erfinder: Lachenmayr, Josef, Vogelberg 11,
D-8907 Ziemetshausen (DE)

## Beschreibung

Die Erfindung bezieht sich auf eine Vorrichtung zum Ausrichten von beispielsweise ungebrannten keramischen Platten, die in einem Stapelgerüst übereinanderliegend bereitgestellt sind, um in einen Kassettenstapel eingeschoben zu werden.

In einer derartigen Vorrichtung werden ungebrannte keramische Platten in Stapel aus keramischen Kassetten eingebracht, um in diesen Kassetten in einem nachfolgenden Brennofen gebrannt zu werden. Die Kassetten bzw. Kassettenstapel werden dazu auf Ofenwagen aufgesetzt und durch den Brennofen gefahren. Bei längerer mehrmaliger Benutzung der Kassettenstapel werden diese ofteinseitig verbogen, d.h. die Stapel sind vertikal gekrümmt. Dies beruht auf einer gewissen Erweichung der Kassetten beim Brennen und auf einer Abnutzung der Ofenwagen, so daß die Kassettenstapel sich verschieben und schief werden. Beim neuerlichen Beschicken der Kassettenstapel mit keramischen Platten, die in einem Stapelgerüst bereitgestellt sind, ergeben sich Schwierigkeiten wegen der nicht vertikalen Ausrichtung der Kassetten.

Zweck der Erfindung ist es daher, die Platten im Stapelgerüst so auszurichten, daß sie in die Kassetten frei, ohne anzuecken, eingeschoben werden können. Es ist bekannt, keramische Platten im Stapelgerüst durch eine Umsetzvorrichtung vertikal vorzurichten, d.h. ihre Höhenlage zu verändern. Ein Ausrichten mit horizontalem Angleichen der Lage der einzelnen Platten zur vertikalen Ausrichtung des Plattenstapels unter Anpassung an die vertikale Verkrümmung des Kassettenstapels ist bisher nicht bekannt.

Es ist Aufgabe der Erfindung, eine Vorrichtung zu schaffen, die das horizontale Angleichen, d.h. das vertikale Ausrichten der Platten im Stapelgerüst an eventuelle Verkrümmungen des Kassettenstapels vor dem Einschieben der Platten in den Kassettenstapel ermöglicht.

Diese Aufgabe wird bei einer Vorrichtung der eingangs genannten Art durch die im Kennzeichen des Anspruchs 1 angegebenen Merkmale gelöst. Zweckmäßige Ausgestaltungen der Erfindung sind in den Unteransprüchen angegeben, wobei Anspruch 3 eine Vorrichtung zum selbsttätigen Ausrichten unter Anpassung an die jeweilige Krümmung des Kassettenstapels angibt.

Die mit der Erfindung erzielbaren Vorteile bestehen insbesondere darin, daß durch die horizontale Angleichung der Platten an die Verkrümmung des Kassettenstapels ein störungsfreies Einschieben aus dem Stapelgerüst ermöglicht wird.

Ein Ausführungsbeispiel der Erfindung ist in der Zeichnung schematisch dargestellt und wird im folgenden näher beschrieben. Es zeigen

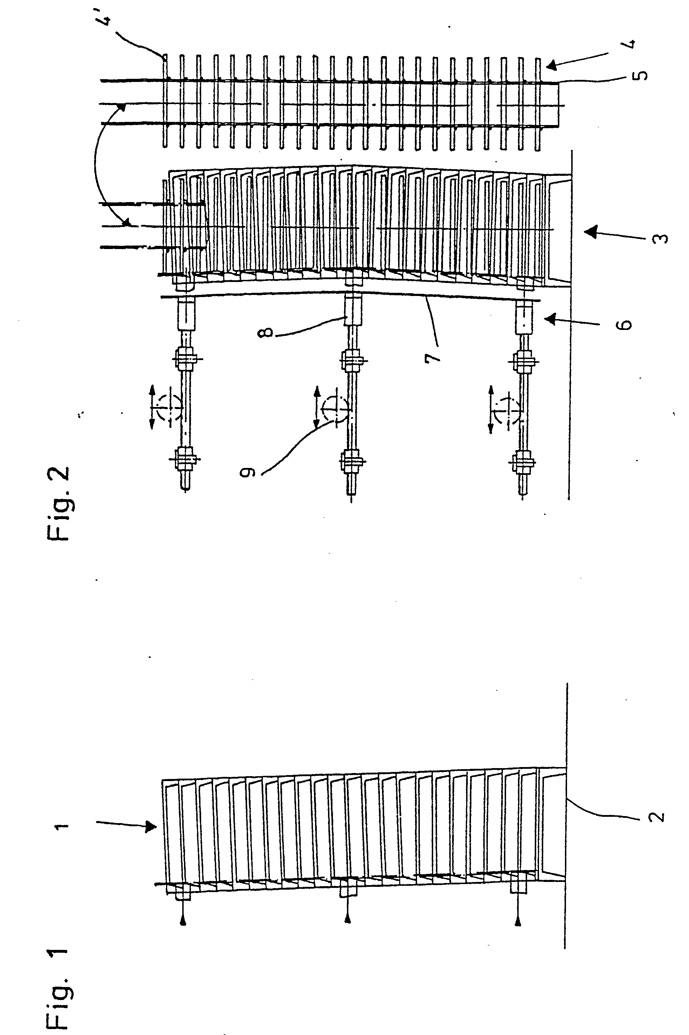

Fig.1 eine Seitenansicht eines verkrümmten Kassettenstapels;

Fig.2 eine Seitenansicht der Ausrichtvorrichtung und des Stapelgerüsts;

Fig.3 eine Draufsicht auf die Vorrichtung nach Fig.2

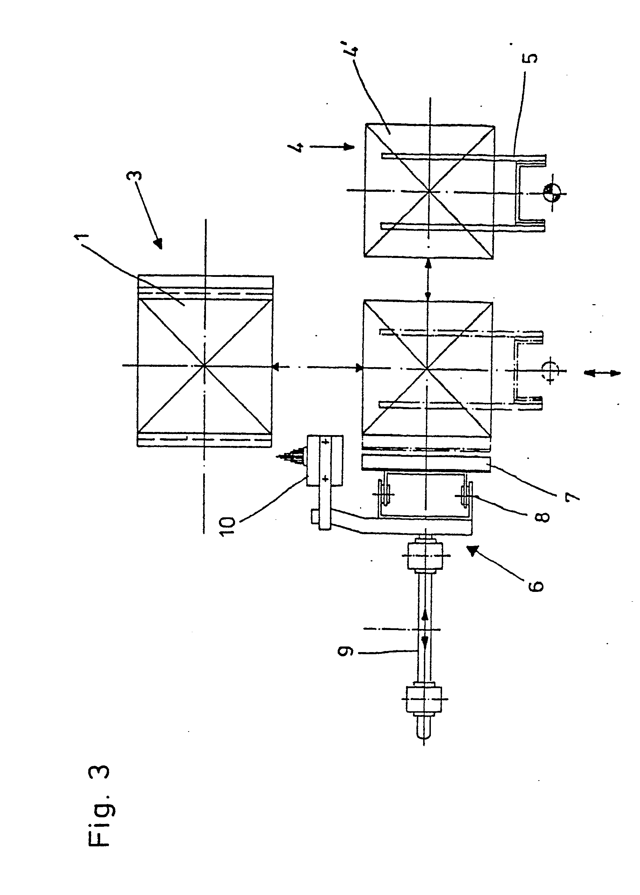

Der Kassettenstapel 1 wird auf einer nicht näher erläuterten Unterlage 2 zu einer Beladestation 3 gebracht, wo in einem Stapelgerüst 5 bereitliegende Plattenstapel 4 aus keramischen Platten 4' in den Kassettenstapel 1 eingeschoben werden (Fig.3). Die Bewegung des Stapelgerüstes 5 zu dem Kassettenstapel 1 erfolgt in Richtung der in Fig.3 angegebenen Pfeile in bekannter Weise und wird nicht näher erläutert. Vor dem Einschieben des Plattenstapels 4 mit Hilfe des Stapelgerüstes 5 in den Kassettenstapel 1 wird mit einer Ausrichtvorrichtung 6 die horizontale Lage der Platten 4' im Plattenstapel 4, d.h. die vertikale Ausrichtung des Plattenstapels an die Verkrümmung des Kassettenstapels 1 mittels einer Richtleiste 7 vorgenommen, die aus biegeelastischem Material, z.B. aus Federstahl, besteht.

Die Richtleiste 7 in der Ausrichtvorrichtung 6 ist bei der gezeigten Ausführungsform an drei Aufhängungen 8 gelenkig gelagert. Jede Aufhängung 8 weist eine nur schematisch dargestellte, insgesamt mit 9 bezeichnete Stellvorrichtung auf, mit welcher die horizontale Position jeder Aufhängung 8 einstellbar ist. In Höhe jeder Aufhängung 8 und jeder dieser Aufhängungen zugeordnet ist eine elektro-optische Abtasteinrichtung 10, beispielsweise eine Fotozelle, angeordnet. Durch Steuerung der Stelleinrichtungen 9 und damit der horizontalen Position jeder Aufhängung 8 über die Fotozelle 10 ist damit eine selbsttätige Anpassung und Einstellung der Krümmung der Richtleiste 7 an die vertikale Krümmung des Kassettenstapels 1 ermöglicht.

Wird die Richtleiste 7 gegen den im Stapelgerüst 5 befindlichen Plattenstapel 4 gefahren, so kann der Hub jeder einzelnen Aufhängung 8 durch die Abtastung des Kassettenstapels 1 in Höhe der jeweiligen Aufhängung 8 mit der Fotozelle 10 gesteuert werden.

## Patentansprüche:

1. Vorrichtung zum Ausrichten von beispielsweise ungebrannten keramischen Platten (4'), die in einem Stapelgerüst (5) übereinanderliegend bereitgestellt sind, um in einen Kassettenstapel eingeschoben zu werden, dadurch gekennzeichnet, daß vertikal parallel zu dem Kassettenstapel (1) eine biegeelastische Richtleiste (7) zum horizontalen Angleichen der Lage der einzelnen Platten (4') im Stapelgerüst (5) an die vertikale Krümmung des Kassettenstapels (1) vorgesehen ist, wobei die Richtleiste (7) an mehreren übereinanderliegenden Aufhängungen (8) gelenkig befestigt ist und jeder Aufhängung (8) eine Stellvorrichtung (9) zur Einstellung ihrer horizontalen Lage und damit der vertikalen Krümmung der Richtleiste (7) zugeordnet ist.

2. Vorrichtung nach Anspruch 1,
dadurch gekennzeichnet,
daß die biegeelastische Richtleiste (7) derart vor dem Kassettenstapel (1) angeordnet ist, daß vor dem Einschieben der Platten (4') das Stapelgerüst (5) mit den Platten (4') gegen die vorgebogene Richtleiste (7) oder umgekehrt, die Richtleiste (7) gegen das Stapelgerüst (5) fahrbar ist.

3. Vorrichtung nach Anspruch 1 oder 2,
dadurch gekennzeichnet,
daß jeder Aufhängung eine elektro-optische Abtasteinrichtung (10) zugeordnet ist, welche die horizontale Lage des Kassettenstapels (1) in Höhe der zugeordneten Aufhängung (8) erfaßt und die jeweilige Stellvorrichtung (9) unter Einstellung der horizontalen Position der Aufhängung (8) und damit der vertikalen Krümmung der Richtleiste (7) selbsttätig steuert.

**Claims:**

1. Apparatus for aligning, for example, unbaked ceramic plates (4') which are placed in readiness in superimposed relationship in a stacking scaffold (5) for insertion into a cassette stack, characterized in that there is provided vertically parallel to the cassette stack (1) a flexible alignment bar (7) for horizontal adjustment of the position of the individual plates (4') in the stacking scaffold (5) to the vertical curvature of the cassette stack (1), with the alignment bar (7) being hinged to several superimposed suspensions (8), and a setting device (9) being associated with each suspension (8) for setting its horizontal position and thus the vertical curvature of the alignment bar (7).

2. Apparatus according to claim 1, characterized in that the flexible alignment bar (7) is arranged in front of the cassette stack (1) in such a way that prior to insertion of the plates (4'), the stacking scaffold (5) with the plates (4') is drivable against the prebent alignment bar (7), or vice versa, the alignment bar (7) against the stacking scaffold (5).

3. Apparatus according to claims 1 or 2, characterized in that there is associated with each suspension an electro-optical scanning mechanism (10) which detects the horizontal position of the cassette stack (1) at the level of the associated suspension (8) and automatically controls the respective setting device (9) for setting the horizontal position of the suspension (8) and thus the vertical curvature of the alignment bar (7).

**·Revendications**

1) Dispositif pour l'alignement de carreaux de céramique non cuits (4) par exemple qui sont placés en attente dans un cadre d'empilage (5), tout en étant auperposes, pour être introduits dans une pile de cassettes, caractérisé par le fait que verticalement et parallélement à la pile de cassettes (1), est prévue une barre flexible d'alignement (7), destinée à la mise à niveau horizontale de la position des divers carreaux (4'), dans le cadre d'empilage (5), contre la courbure verticale de la pile de cassettes (1), la barre d'alignement (7) étant articulée sur plusieurs suspensions (8) et un dispositif de réglage (9) étant adjoint à chaque suspension (8) pour le réglage de sa position horizontale et ainsi de la courbure verticale de la barre d'alignement (7).

2) Dispositif d'après la revendication 1, caractérisé par le fait que la barre d'alignement (7) est disposée devant la pile de cassettes (1) de telle manière que, avant l'introduction des carreaux (4'), le cadre d'empilage (5) et les carreaux (4') puissent être deplaces contre la barre d'alignement précambrée (7) ou, inversement, la barre d'alignement (7) contre le cadre d'empilage (5).

3) Dispositif d'après la revendication 1 ou 2, caractérisé par le fait qu'à chaque suspension est adjoint un palpeur électro-optique (10) qui détecte la position horizontale de la pile de cassettes (1) au niveau de la suspension adjointe (8) et commande automatiquement le dispositif de réglage concerné (9), avec réglage de la position horizontale de la suspension (8) et ainsi de la courbure verticale de la barre d'alignement (7).

Fig. 2

Fig. 1

Fig. 3